# DEMANDE DE BREVET EUROPEEN

(11) **EP 1 746 301 A1**
(43) Date de publication de la demande: **24.01.2007**
(21) Numéro de dépôt: 05291550.1
(22) Date de dépôt: 20.07.2005
(51) Int. Cl.: F16D 65/54, F16D 65/14

(54) **Etrier de frein à disque électromécanique**

(71) Demandeur: Delphi Technologies, Inc., Troy, MI 48007 (US)
(72) Inventeur: Delayre, Xavier, 92400 Courbevoie (FR); Loche, Jacques, 92600 Asnieres (FR)
(74) Mandataire: Laget, Jean-Loup

(57) **Abrégé**

L'étrier de frein (101) comporte une vis à billes (104) comprenant une partie rotative (118) et une partie mobile en translation (120), ledit étrier comprenant une première plaquette de frein (106) reliée à un support de plaquette (123) couplé à ladite partie mobile en translation de la vis à billes par un organe de poussée (131, 136). L'organe de poussée est apte à entraîner une translation conjointe de ladite partie mobile en translation de la vis à billes et dudit support de plaquette. L'étrier comprend en outre un moyen élastique (152) apte à déplacer ledit support de plaquette d'une distance déterminée dans le sens opposé à ladite translation conjointe. L'organe de poussée définit au moins une première et une deuxième position relative de ladite partie mobile en translation et dudit support de plaquette.

## Description

La présente invention concerne un étrier de frein à disque électromécanique, en particulier, mais non exclusivement, destiné à équiper des véhicules automobiles.

En général, un étrier de frein est associé à chacune des roues d'un véhicule automobile pour obtenir un freinage équilibré et efficace.

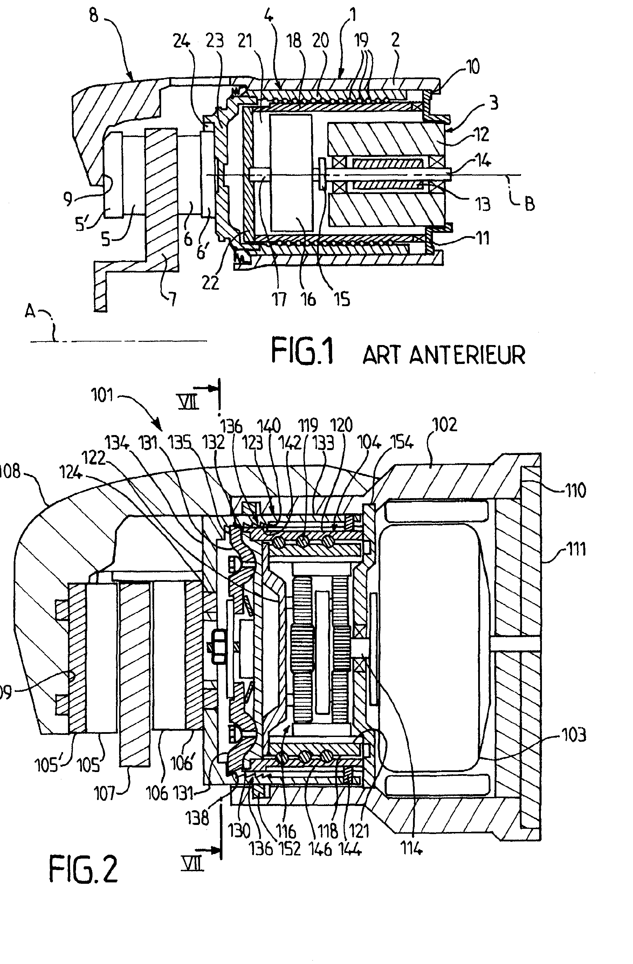

Un tel étrier de frein électromécanique selon l'art antérieur est représenté sur la figure 1 des dessins annexés. La partie gauche de cette figure correspond au côté de l'étrier électromécanique 1 placé en regard de la roue. Nous parlerons du côté roue par opposition au côté carrosserie. L'axe A représente l'axe de la roue (non représentée).

L'étrier électromécanique 1 comporte un boîtier 2 à l'intérieur duquel sont logés un moteur électrique 3, une vis à billes 4 et des plaquettes de frein externe 5 et interne 6 disposées de part et d'autre d'un disque de frein 7. Les plaquettes de frein 5 et 6 sont constituées d'un matériau possédant un coefficient de frottement élevé. Elles sont solidaires d'une tôle de fixation respective 5' et 6'.

Le boîtier 2 illustré est du type monté flottant selon la direction perpendiculaire au disque de frein 7 sur un élément solidaire de la carrosserie du véhicule. Il comporte, côté roue, une extension latérale en L 8 en une seule pièce avec le reste du boîtier et ayant une surface interne 9 contre laquelle la plaquette de frein externe 5 est fixée par l'intermédiaire de la tôle de fixation correspondante 5'. Le boîtier 2 comporte, côté carrosserie, un épaulement 10. Un élément de maintien 11 placé sur l'épaulement 10 du boîtier 2 et comportant un moyen de fixation du moteur électrique 3 permet de solidariser celui-ci au boîtier 2.

Le moteur électrique 3 utilisé dans un étrier électromécanique peut être n'importe quel moteur à courant continu. Dans l'exemple illustré, le moteur électrique 3 est un moteur à aimant permanent. Le moteur électrique 3 comporte un stator 12 constitué d'une pluralité d'enroulements de fils de cuivre. Il est fixe par rapport au boîtier 2 et solidaire de l'élément de maintien 11.

Le stator 12 comporte un trou cylindrique central d'axe B à l'intérieur duquel est logé un rotor 13, constitué d'un aimant permanent et apte à tourner autour de l'axe B. Lorsqu'une puissance électrique est fournie à cette pluralité d'enroulements du stator 12, le rotor 13 subit une force qui le met en rotation autour de l'axe B. Le moteur électrique 3 comporte un arbre moteur 14 solidaire du rotor 13. Lorsque ce dernier est mis en mouvement, il transmet son mouvement de rotation à l'arbre moteur 14.

Afin de piloter le fonctionnement du moteur électrique 3 à aimant permanent, un capteur de position angulaire 15 est fixé sur l'arbre moteur 14 en sortie du moteur électrique 3. Ce capteur 15 permet de mesurer l'angle de rotation de l'arbre moteur 14 et donc du rotor 13, par rapport au stator 12. Le capteur de position angulaire 15 est typiquement un capteur à effet Hall.

En sortie du moteur électrique 3, l'arbre moteur 14 est couplé avec une boîte de réduction 16 possédant un arbre de sortie 17. La boîte de réduction 16 permet d'obtenir un rapport entre la vitesse de rotation de l'arbre moteur 14 et la vitesse de rotation de l'arbre de sortie 17, typiquement de 30 pour 1. Et, pour une rotation d'un angle de rotation donné de l'arbre moteur 14, l'arbre de sortie 17 tournera d'un angle de rotation 30 fois plus faible. En revanche, l'intensité du couple de l'arbre de sortie 17 est 30 fois plus important que le couple de l'arbre moteur 14.

La vis à billes 4 mentionnée ci-dessus est couplée à l'arbre de sortie 17. Cette vis à billes 4 comporte une partie formant vis 18, des billes 19 et une partie formant écrou 20. Cette dernière est guidée dans le boîtier 2 sur son diamètre et son blocage en rotation est assuré par un emmanchement dans le piston 23 qui est lui-même retenu par la tôle de fixation 6' au moyen du blocage 24.

La partie formant vis 18 est de forme cylindrique et s'étend autour de l'axe B. Elle est creuse et définit dans son intérieur une cavité cylindrique 21 recevant le moteur 3, la boîte de réduction 16, ainsi que leurs axes respectifs 14, 17. La partie formant vis 18 est en liaison avec l'arbre de sortie 17 par l'intermédiaire d'une extrémité radiale close 22. La rotation de l'arbre de sortie 17 est ainsi transmise à la partie formant vis 18 de la vis à billes 4.

La surface extérieure filetée de la partie formant vis 18 et la surface intérieure taraudée de la partie formant écrou 20, en regard l'une de l'autre, forment ensemble un canal hélicoïdal recevant les billes 19. Cet agencement permet à la partie formant vis 18 animée d'un mouvement de rotation par rapport au boîtier 2 d'entraîner la partie formant écrou 20 dans un mouvement de translation par rapport au boîtier 2.

Du côté roue, la partie formant écrou 20 est fixée à un support transversal 23 maintenant la plaquette de frein interne 6 par l'intermédiaire de la tôle de fixation 6' de celle-ci. Dans l'exemple illustré, ce support transversal 23 forme un capuchon obturant la partie formant écrou 20 radialement. La plaquette de frein est retenue dans une chape de frein classique (non représenté) reliée au boîtier et qui assure son blocage en rotation sous l'effet combiné du piston 23 et du frottement sur le disque de frein.

Lorsque la partie formant écrou 20 est animée d'un mouvement de translation par rapport au boîtier 2 dirigée vers le côté roue, la plaquette de frein interne 6, maintenue par le capuchon d'écrou constituant le support transversal 23, se rapproche de la plaquette de frein externe 5. Simultanément, le boîtier flottant 2 subit une force de réaction et est déplacé dans un mouvement de translation vers la droite de la figure 1.

Ainsi, la surface de contact interne de la plaquette de frein externe 5 et la surface de contact externe de la plaquette de frein interne 6, en regard l'une de l'autre, se rapprochent mutuellement, et le disque de frein 7 placé entre lesdites surfaces de contact est serré entre celles-ci. Le disque 7 étant solidaire de la roue, la force de serrage entraîne un frottement qui a pour conséquence de ralentir le mouvement de rotation de la roue autour de l'axe de rotation A et donc de freiner le véhicule.

Le matériau de friction des plaquettes de frein 5 et 6 est sujet à usure chaque fois que le frein est serré. Pour des questions de sécurité, il est souhaitable que le temps de réponse du frein soit aussi court et constant que possible pendant toute la durée de vie du frein. Le temps de réponse du frein dépend de la vitesse du moteur 3, mais aussi de la longueur de la course morte que le moteur 3 doit faire effectuer au support 23 et à la partie formant écrou 20 de la vis à bille 4 pour amener les plaquettes de frein 5 et 6 en contact avec le disque 7. Si le moteur 3 fait toujours partir le support 23 et la partie formant écrou 20 de la même position de repos, il est clair que la course morte et, par suite, le temps de réponse du frein vont augmenter avec le degré d'usure des plaquettes de frein 5 et 6.

Afin de compenser l'usure des plaquettes de frein 5 et 6, il est connu de modifier la position de repos de la partie faisant écrou 20, par exemple chaque fois que le frein est serré. Pour cela, après un serrage du frein, le moteur 3 ramène la partie faisant écrou jusque dans une position de repos correspondant à une course morte déterminée. En raison de l'usure des plaquettes de frein 5 et 6, cette position de repos évolue entre une position de repos initiale, vers la droite de la figure 1 et correspondant à des plaquettes 5 et 6 neuves, et une position de repos terminale vers la gauche de la figure 1 et correspondant à des plaquettes de frein 5 et 6 dont l'usure correspond à une usure maximale admissible. En d'autres mots, l'usure est compensée par l'ex tension de la vis à bille 4. La vis à bille 4 doit donc être suffisamment longue pour permettre à la partie formant écrou 20 d'évoluer entre ces deux positions.

De plus, pour positionner la partie faisant écrou 20 dans sa position de repos, il est nécessaire de contrôler le moteur 3 de façon appropriée. Par exemple, le document FR 2 835 896 décrit un étrier dans lequel un moteur est commandé pour déplacer les plaquettes de frein d'une distance déterminée par rapport à la position dans laquelle un contact est détecté entre les plaquettes de frein et le disque de frein, afin de positionner les plaquettes en position de repos. Il est donc nécessaire de prévoir un capteur de contact qui constitue un système compliqué. De plus, il est nécessaire de commander le moteur à l'aide d'un alg orithme précis et compliqué.

L'invention a donc pour but de fournir un étrier de frein à disque électromécanique, ne présentant pas au moins certains des inconvénients précités de l'art antérieur.

Pour cela, l'invention fournit un étrier de frein à disque électromécanique, comportant un boîtier, un moteur électrique logé dans ledit boîtier, une vis à billes comprenant une partie rotative couplée en rotation avec ledit moteur électrique et une partie mobile en translation apte à se déplacer en translation par rapport au boîtier sous l'action du moteur électrique, ledit étrier comprenant une première plaquette de frein reliée à un support de plaquette couplé à ladite partie mobile en translation de la vis à billes par un organe de poussée, une deuxième plaquette de frein reliée au boîtier de manière à être disposée en regard de ladite première plaquette de frein pour recevoir un disque de frein entre lesdites plaquettes de frein, ledit organe de poussée étant apte à entraîner une translation conjointe de ladite partie mobile en translation de la vis à billes et dudit support de plaquette lors d'une rotation dudit moteur électrique dans un sens d'actionnement, de manière à rapprocher lesdites plaquettes de frein entre elles afin de serrer ledit disque de frein entre lesdites plaquettes de frein, une rotation dudit moteur électrique dans le sens opposé au sens d'actionnement entraînant une translation opposée de la partie mobile en translation de ladite vis à bille, caractérisé en ce que ledit étrier comprend un moyen élastique apte à déplacer ledit support de plaquette par rapport au boîtier d'une distance déterminée dans le sens de ladite translation opposée lors de ladite translation opposée, ledit organe de poussée définissant au moins une première et une deuxième position relative de ladite partie mobile en translation de la vis à billes et dudit support de plaquette, ledit support de plaquette dans ladite deuxième position relative étant plus proche de ladite deuxième plaquette que dans ladite première position relative, ledit organe de poussée étant configuré de sorte que ladite translation opposée entraîne le passage de ladite première position relative à ladite deuxième position relative lorsque la différence entre la longueur de ladite translation opposée et ladite distance déterminée est supérieure à un seuil donné..

Ainsi, après une opération de freinage pour laquelle la longueur de la translation conjointe est importante, en raison de l'usure, le moteur peut déplacer la partie mobile en translation au cours de la translation opposée d'une distance également importante, alors que le moyen élastique ne déplace le support de plaquette que de ladite distance déterminée, ce qui, le cas échéant, entraîne le passage de la partie mobile en translation de la vis à billes et du support de plaquette dans la deuxième position relative, dans laquelle l'usure est compensée. Ainsi, la vis à billes peut être de longueur limitée car l'usure ne doit plus être compensée par l'extension de la vis à bille. Cela permet de réduire l'encombrement de l'étrier et/ou d'augmenter la taille d'autres éléments. Par exemple, on peut utiliser un moteur de plus grande taille et donc de plus grande puissance. Après une opération de freinage, la partie mobile en translation de la vis à billes peut être ramenée par le moteur, au cours de la translation opposée, dans une potion de repos unique, c'est-à-dire qui ne change pas avec le temps. La commande du moteur peut donc être très simple. De plus, il n'est pas nécessaire de prévoir un capteur de contact.

De préférence, ledit support de plaquette comprend une portion cylindrique apte à coulisser dans un logement cylindrique ménagé dans ledit boîtier, ledit boîtier présentant une rainure annulaire ouverte du côté de l'intérieur dudit logement cylindrique, ledit moyen élastique comprenant un corps annulaire en matériau élastomère agencé dans ladite rainure annulaire de manière à être en contact avec ladite portion cylindrique dudit support de plaquette, la section dudit corps annulaire étant inférieur à la section de ladite rainure annulaire de manière à ce qu'un jeu soit ménagé, ledit corps annulaire étant apte à se déformer lors de ladite translation conjointe et à reprendre sa forme initiale lors de ladite translation opposée.

Avantageusement, ledit organe de poussée comprend une crémaillère munie de dents fixée audit support de plaquette et au moins un cliquet fixé à ladite partie mobile en translation de ladite vis à bille et destiné à coopérer avec ladite au moins une crémaillère, ledit au moins un cliquet étant apte à coopérer avec une première dent desdites dents lors de ladite translation conjointe, ladite première dent définissant ladite première position relative.

De préférence, ledit au moins un cliquet est apte à se désengager de ladite première dent lors de ladite translation opposée lorsque la différence entre la longueur de ladite translation opposée et ladite distance déterminée est supérieure audit seuil donné, pour coopérer avec une deuxième dent desdites dents, ladite deuxième dent définissant ladite deuxième position relative.

Selon un mode de réalisation particulier, le dispositif comprend au moins une première crémaillère, une deuxième crémaillère, un premier cliquet destiné à coopérer avec ladite première crémaillère et un deuxième cliquet destiné à coopérer avec ladite deuxième crémaillère.

Avantageusement, les dents de ladite première crémaillère sont disposées en quinconce par rapport aux dents de ladite deuxième crémaillère, lesdits premier et deuxième cliquets étant alignés, de sorte que seul l'un desdits premier et deuxième cliquets coopère avec une dent lors de ladite translation conjointe.

Grâce à ces caractéristiques, le support de plaquette peut prendre au moins une position relative définie par ladite au moins une première crémaillère, et au moins une autre position relative définie par ladite au moins une deuxième crémaillère. Ainsi, le support de plaquette peut prendre plusieurs positions de repos, espacées les unes des autres d'une distance inférieure à la longueur des dents. La course morte que doit parcourir le support de plaquette n'est donc jamais supérieure à la longueur d'une dent.

De préférence, ledit seuil donné est égal à la moitié de la longueur d'une desdites dent.

Avantageusement, ledit organe de poussée est apte à prendre un état de retour, ladite partie mobile en translation de la vis à billes et ledit support de plaquette étant aptes à passer de ladite deuxième position relative à ladite première position relative lorsque ledit organe de poussée est dans ledit état de retour.

Ainsi, quand les plaquettes de frein sont trop usée, en positionnant l'organe de poussée dans son état de retour, il est possible de revenir à ladite première position relative. On peut alors placer des plaquettes neuves sur l'étrier sans devoir changer l'ensemble de l'étrier.

De préférence, ledit au moins un cliquet est monté de manière mobile entre une position de coopération dans laquelle il est apte à coopérer avec ladite au moins une crémaillère et une position de retour, correspondant audit état de retour de l'organe de poussée, dans laquelle il ne coopère pas avec ladite au moins une crémaillère.

Avantageusement, ledit organe de poussée comprend un organe élastique apte à solliciter ledit au moins un cliquet dans ladite position de coopération et une plaque d'appui coopérant avec ledit cliquet de sorte qu'un déplacement de ladite plaque d'appui à l'encontre de l'action dudit organe élastique sollicite ledit au moins un cliquet dans ladite position de retour de manière à le libérer de ladite au moins une crémaillère.

Selon un mode de réalisation particulier, l'organe de poussée comprend un support de cliquet comprenant au moins une encoche de réception dans laquelle est agencé ledit au moins un cliquet, ledit au moins un cliquet présentant un alésage traversant, ledit au moins un cliquet étant fixé audit support de cliquet par au moins une vis dont la tige traverse ledit alésage traversant, ledit alésage traversant étant conique, ledit au moins un cliquet, ladite au moins une encoche de réception et la tête de ladite au moins une vis présentant des surfaces courbées de formes correspondantes de manière à permettre un déplacement dudit au moins un cliquet entre ladite position de coopération et ladite position de retour.

De préférence, l'organe de poussée comprend un support de cliquet présentant au moins un axe de pivotement, ledit au moins un cliquet étant fixé audit support de cliquet par ledit au moins un axe de pivotement de manière à pouvoir pivoter entre ladite position de coopération et ladite position de retour.

Avantageusement, l'organe de poussée définit plus de deux positions relatives de ladite partie mobile en translation de la vis à billes et dudit support de plaquette.

De préférence, ladite partie rotative de ladite vis à bille définit un espace intérieur, ledit moteur électrique étant agencé à l'extérieur dudit espace intérieur.

Ainsi, la taille du moteur n'est pas limitée par la taille de l'espace intérieur.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue en coupe d'un étrier électromécanique selon l'art antérieur ;
- la figure 2 est une vue en coupe d'un étrier électromécanique selon un premier mode de réalisation de l'invention, avec des plaquettes de frein neuves et n'appliquant pas de force de freinage ;
- la figure 3 est une vue similaire à la figure 2, l'étrier appliquant une force de freinage ;
- la figure 4 est une vue en coupe de l'étrier de la figure 2, avec des plaquettes de frein usées et n'appliquant pas de force de freinage ;
- la figure 5 est une vue similaire à la figure 4, l'étrier appliquant une force de freinage ;
- la figure 6 est une vue similaire à la figure 4, l'usure des plaquettes de frein ayant été compensée ;
- la figure 7 est une vue partielle en coupe de l'étrier de la figure 2 selon la ligne VII-VII de la figure 2, la plaque d'appui ayant été retirée ;
- la figure 8 est une vue en coupe de l'étrier de la figure 2, lors d'une opération de remplacement des plaquettes de frein ;
- la figure 9 est une vue en coupe d'un étrier selon un deuxième mode de réalisation de l'invention ; et,
- la figure 10 est une vue en coupe de l'étrier de la figure 9 selon la ligne X-X de la figure 9, la plaque d'appui ayant été retirée.

Sur les figures 2 à 7, les éléments de l'étrier électromécanique 101 identiques ou similaires à des éléments de l'étrier 1 de la figure 1 portent les mêmes numéros de références que les éléments correspondant de l'étrier 1, augmenté de 100. Certains éléments ne seront plus décrits en détail.

Une plaque support de cliquet 130 est fixée à l'extrémité de la partie écrou 120 située côté carrosserie. La plaque 130 porte six cliquets 131, répartis uniformément sur la circonférence de la plaque 130 dans l'exemple illustré. Chaque cliquet 131 présente une face de poussée 135 orientée côté carrosserie, et une face extérieure inclinée 132. Toutes les faces de poussées 135 sont situées dans un même plan.

Le piston support de plaquette 123 présente une portion cylindrique 133, entourant la partie formant écrou 120 et la plaque 130. La portion cylindrique 133 est apte à coulisser dans un alésage cylindrique 150 du boîtier 102. Le piston 123 comprend, sur la face intérieure de la portion cylindrique 133, des ergots 144 qui pénètrent dans des cannelures 146 ménagées sur la face extérieure de la partie formant écrou 120. Les ergots 144 et les cannelures 146 autorisent un coulissement axial relatif du piston 123 et de la partie formant écrou 120, mais empêchent une rotation relative entre ces éléments. Comme le piston 123 est lui-même maintenu fixe en rotation par rapport au boîtier 102, la partie formant écrou 120 est également fixe en rotation par rapport au boîtier.

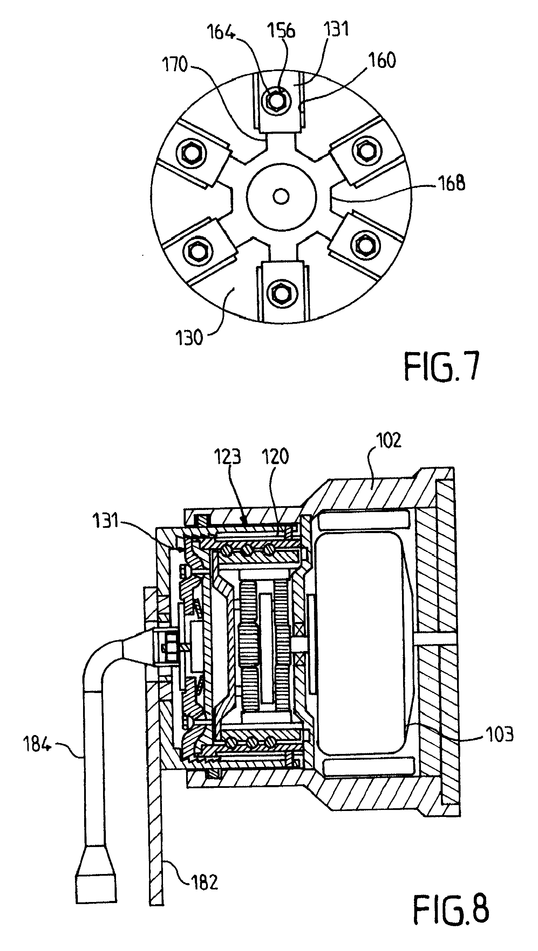

A son extrémité côté carrosserie, le piston 123 est fermé par une paroi 134 sensiblement parallèle à la plaque 130, et à laquelle est fixée la plaquette de frein 106. Sur la face intérieure de la portion cylindrique 133, le piston 123 présente six crémaillères 136 composées de dents 138. Chaque crémaillère 136 est agencée en regard d'un cliquet 131 pour coopérer avec celui-ci. Chaque dent 138 présente une face de poussée 140 orientée du côté roue et destinée à coopérer avec la face de poussée 132 d'un cliquet 131, et une face intérieure inclinée 142 destinée à coopérer avec la face extérieure 132 du cliquet 130. Trois premières crémaillères 136, dont celle représentée sur le bas de la figure 2, sont réparties à 120° les une des autres. Les dents 138 de ces trois premières crémaillères 136 sont alignées entre elles, c'est-à-dire que leurs surfaces de poussées 140 sont agencées dans des plans correspondants. Les trois autres crémaillères 136, dont celle représentée sur le haut de la figure 2, sont également réparties à 120° les unes des autres, et décalées de 60° par rapport aux premières crémaillères 136. Les six crémaillères sont donc réparties à 60° les unes des autres, comme on le voit sur la figure 7. Les dents 138 de ces trois autres crémaillères sont également alignées entre elles, mais sont agencées en quinconce par rapport aux dents 138 des trois premières crémaillères 136. En d'autres mots, les surfaces de poussée 140 des dents 138 des trois autres crémaillères sont agencées dans des plans décalés par rapports aux plans des surfaces de poussée 140 des dents 138 des trois premières crémaillères. Dans l'exemple représenté sur les figures, le décalage entre les dents 138 des trois premières et des trois autres crémaillères correspond à la demi-longueur d'une dent 138.

Le boîtier présente une rainure annulaire 148 ouverte vers l'intérieur de l'alésage cylindrique 150. Un joint annulaire 152 en matériau élastomère est agencé dans la rainure 148, en contact avec le piston 123. Le joint annulaire 152 présente une section carrée. La rainure annulaire 148 présente une section rectangulaire de taille supérieur à la section du joint 152, de manière à ce qu'un jeu soit ménagé, permettant au joint annulaire 152 de se déformer en s'inclinant. La rainure 148, le joint 152 et son contact avec le piston 123 sont réalisés de manière similaire à un joint d'étanchéité utilisé pour réaliser l'étanchéité entre le piston et le boîtier d'un étrier de frein hydraulique connu.

On explique maintenant le fonctionnement de l'étrier 101. La figure 2 représente l'étrier 101 avec des plaquettes 105, 106 neuves ou peu usées. La partie formant écrou 120 de la vis à billes 104 est dans sa position de repos unique, en butée contre une plaque de séparation 154 transversale. Sur la figure 2, les plaquettes 105, 106 ne sont pas en contact avec le disque 107 et aucun freinage n'est appliqué. Les surfaces de poussée 140 des dents 138 situées le plus côté carrosserie des trois premières crémaillères sont en contact avec les surfaces de poussée 135 des cliquets correspondant.

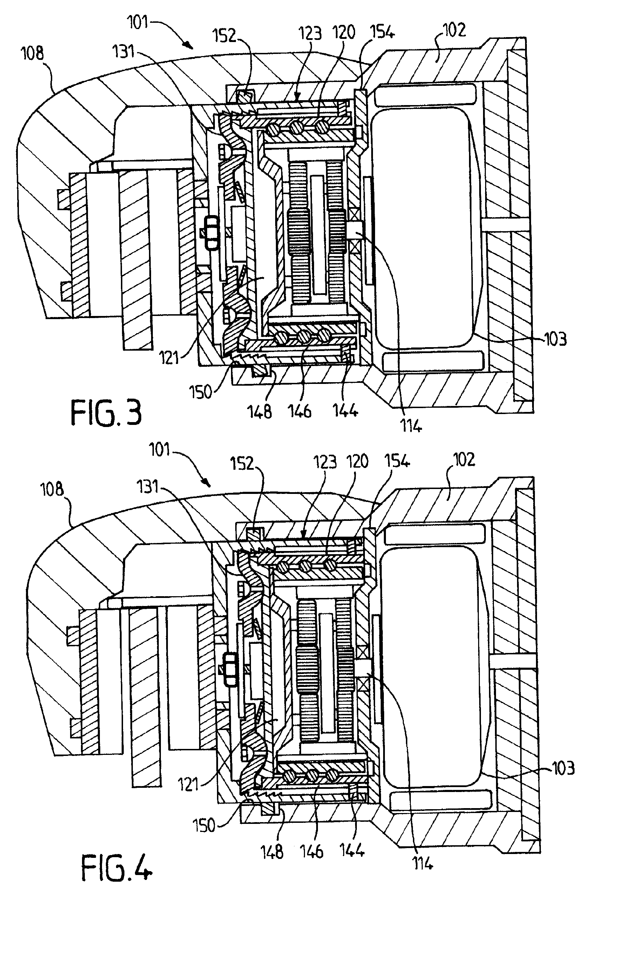

Quand l'étrier 101 doit appliquer un freinage, le moteur 103 est commandé pour faire tourner l'axe 114 dans un sens d'actionnement, ce qui entraîne la rotation de la partie formant vis 118 de la vis à billes 104. Il en résulte une translation vers le côté carrosserie de la partie formant écrou 120 et donc de la plaque 130 et des cliquets 131. En raison du contact entre les surfaces de poussées 135 et 140, le piston 123 est également entraîné en translation. La figure 3 représente l'étrier 101 après cette translation conjointe du piston 123 et de la partie formant écrou 120. Les plaquettes 105 et 106 sont en contact avec le disque 107 et un freinage est appliqué. En raison du frottement entre le piston 123 et le joint 152, ce dernier s'est déformé en s'inclinant au cours de la translation du piston 123, comme on le voit sur la figure 3. Comme les plaquettes 105, 106 son neuve ou peu usée, la longueur de la translation du piston 123 est inférieure à la moitié de la longueur d'une dent 138, et aucun glissement ne se produit entre le joint 152 et le piston 123.

Quand l'étrier 101 doit relâcher le freinage, le moteur est commandé pour faire tourner l'axe 114 en sens inverse, ce qui entraîne la translation vers le côté roue de la partie formant écrou 120, jusqu'à ce que celle-ci se retrouve dans sa position de repos. Comme cette position de repos est unique, la commande du moteur lors de cette étape est très simple. Par exemple, le moteur est commandé en rotation jusqu'à ce qu'il soit détecté que la partie formant écrou 120 arrive en butée contre la plaque de séparation 154. Dans son état déformé de la figure 3, le joint 152 exerce une force sur le piston 123 tendant à translater celui-ci vers le côté roue. Comme les cliquets 131 n'exercent plus de force de poussée sur le piston 123, en raison de la translation de la partie formant écrou 120 vers le côté roue, le piston 123 translate d'une distance déterminée jusqu'à ce que le joint 152 retrouve sa forme initiale non déformée. Comme, au cours de la translation du piston 123 vers le côté carrosserie, aucun glissement ne s'était produit entre le piston 123 et le joint 152, le piston 123 est ramené dans la position illustrée sur la figure 3. Ainsi, si l'opération de freinage n'a pas entraîné une usure trop importante des plaquettes 105 et 106, l'étrier se retrouve dans l'état illustré sur la figure 2, et lors de la prochaine opération de freinage son fonctionnement sera identique à ce qui vient d'être décrit.

Si au contraire l'usure des plaquettes 105, 106 est plus importante, l'étrier se retrouve dans l'état illustré sur la figure 4, dans lequel la distance entre les plaquettes 105, 106 et le disque 107 est plus grande, et son fonctionnement est alors celui décrit ci-dessous.

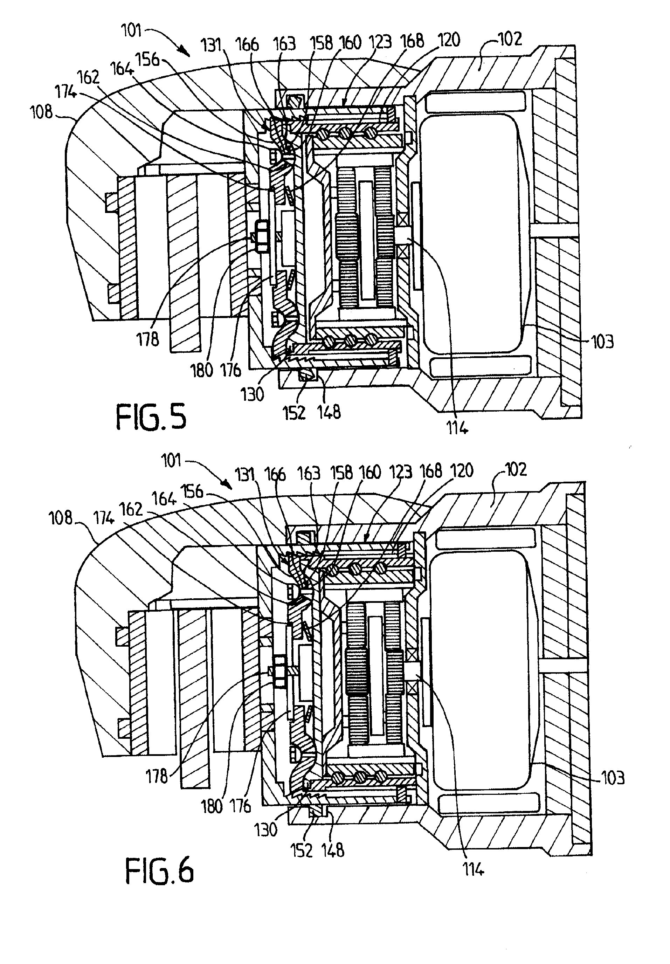

Quand le moteur 103 est commandé pour appliquer un freinage, la translation conjointe de la partie formant écrou 120 et du piston 123 doit être plus importante, en raison de l'usure des plaquettes. Cette translation est dans ce cas plus longue que la demi-longueur des dents 138, et un glissement se produit entre le piston 123 et le joint 152. La figure 5 illustre l'étrier 101 après cette opération.

Quand le moteur 103 est commandé pour relâcher le freinage, il ramène la partie formant écrou 120 dans sa position de repos, comme précédemment. Le joint 152 fait de nouveau translater le piston 123 vers le côté roue d'une distance déterminée pour retrouver sa forme initiale non déformée. Cependant, en raison du glissement qui s'est produit entre le piston 123 et le joint 152, le joint 152 ne ramène pas le piston 123 jusque dans la position représentée sur la figure 5, mais seulement jusque dans la position représentée sur la figure 6. Ainsi, la partie formant écrou 120 et les cliquets 131 subissent une translation vers le côté roue par rapport au piston 123. Au cours de cette translation, les surfaces internes 142 des dents 138 situées le plus du côté carrosserie des trois autres crémaillères coopèrent avec les surfaces externes 132 des cliquets 131 correspondant, pour faire pivoter ces cliquets de manière à ce qu'ils puissent passer au niveau des dents 138 suivantes. Ainsi, comme on le voit sur le bas de la figure 6, les surfaces de poussée 140 des dents 138 situées le plus côté carrosserie des trois premières crémaillères ne sont plus en contact avec les surfaces de poussée 135 des cliquets correspondant, et comme on le voit sur le haut de la figure 6, les surfaces de poussée 140 des dents 138 situées en deuxième position côté carrosserie des trois autres crémaillères sont en contact avec les surfaces de poussée 135 des cliquets correspondant.

Dans l'état de la figure 6, l'usure des plaquettes a été compensée. Le fonctionnement de l'étrier 101 lors du freinage suivant est similaire à ce qui vient d'être décrit. Les rôles des trois premières crémaillères et des trois autres crémaillères et des cliquets correspondant sont permutés. Bien entendu, l'usure pourra encore être compensée par le passage des cliquets 131 au niveau des dents 138 successives.

L'étrier 101 pourrait fonctionner avec uniquement des crémaillères dont les dents sont toutes alignées. Cependant, le fait d'avoir des crémaillères 136 avec des dents 138 disposées en quinconces permet de définir une pluralité de positions de repos du piston 123, espacées les unes des autres de la moitié de la longueur d'une dent 138. Ainsi, la course morte que doit parcourir le piston 123 avant que les plaquettes 105 et 106 entrent en contact avec le disque 107 n'est jamais supérieure à la longueur des dents 138.

L'usure des plaquettes 105, 106 est donc compensée par le déplacement du piston 123 dans une pluralité de positions de repos successives. Ainsi, l'usure ne doit pas, contrairement aux étrier de l'art antérieur, être compensée par une extension de la vis à billes 104, qui peut donc présenter une longueur courte, c'est-à-dire juste suffisante pour pouvoir s'allonger en déplaçant la partie formant écrou 120 depuis sa position de repos unique, vers une position d'actionnement correspondant à une course morte de longueur inférieure à la longueur d'une dent 138. Pour un boîtier 102 de taille donnée, le fait d'utiliser une vis à billes plus courte par rapport aux vis à billes utilisées dans l'art antérieur permet un gain de place.

Dans l'étrier 101, ce gain de place permet d'utiliser un moteur 103 de plus grande taille et de plus grande puissance. Le moteur 103 est situé à l'extérieur de la cavité cylindrique 121. Sa taille n'est donc pas limitée par la taille de la cavité 121.

Comme expliqué ci-dessus, les cliquets 131 sont montés sur la plaque support 130 de manière à pouvoir pivoter, ce qui permet de passer d'une dent à la suivante. Pour cela, chaque cliquet 131 présente un alésage traversant 162 de forme conique. Une vis 163 présente une tige 166 qui passe à travers l'alésage 162 et est vissée dans un alésage taraudé ménagé dans la plaque 130, et une tête de vis 164 qui maintient le cliquet 131 sur la plaque 130. Au niveau du cliquet 131, la plaque 130 présente une encoche de réception 160. La surface de fond de l'encoche 160 est concave, et la surface tournée vers l'encoche 160 du cliquet 131 présente une zone convexe 158, de forme correspondante. La surface tournée vers la tête de vis 164 du cliquet 131 présente une zone concave 156, et la tête de vis 164 présente une surface convexe de forme correspondante. Ainsi, par glissement relatif des surfaces 158 et 160 d'une part, 156 et 164 d'autre part, et par débattement de la tige 166 dans l'alésage 162, le cliquet 131 peut pivoter entre une position de coopération, illustrée sur les figures 2 à 6, dans laquelle les surfaces de poussées 135 et 140 sont apte à coopérer, et une position de passage dans laquelle le cliquet peut passer d'une dent 138 à la dent 138 suivante.

Un organe élastique sous forme d'un ressort 168 sollicite les cliquets 131 dans leur position de coopération. Le ressort 168 est analogue à une rondelle Belleville prenant appui sur la plaque 130 et présentant six pattes 170 s'étendant radialement. Chaque patte 170 s'appuie sur la surface du cliquet 131 tournée vers le côté roue, au niveau d'une zone intérieure par rapport à l'alésage 162. Du côté carrosserie, au niveau de cette zone intérieure, le cliquet 131 présente un lamage 174. Une plaque d'appui 176 circulaire est fixée à la plaque 130 par une tige taraudée 178 et un écrou 180, de manière à prendre appui dans les lamages 174 des cliquets 131. La plaque d'appui 174 définit la position de coopération des cliquets 131.

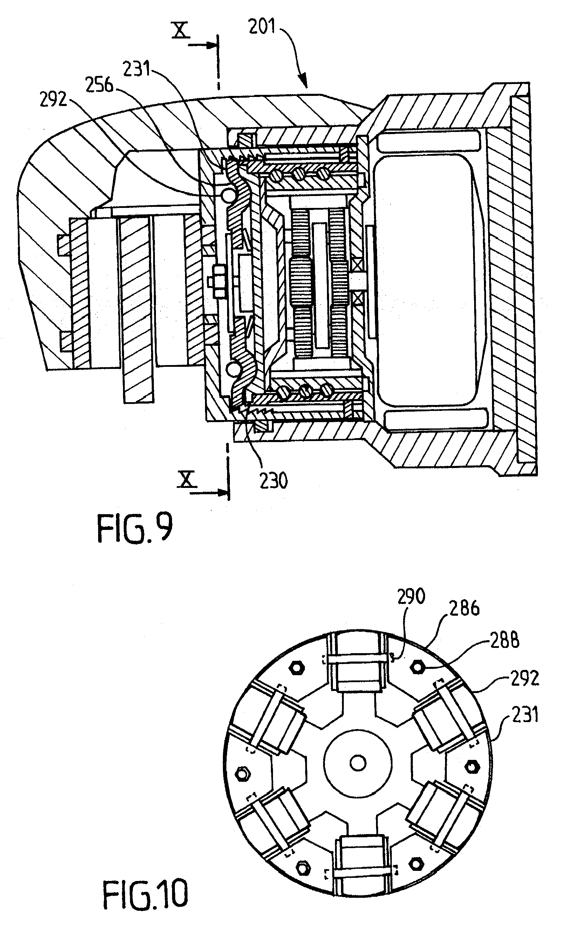

La figure 8 représente partiellement l'étrier 101, au cours d'une opération de remplacement des plaquettes 105, 106 usées, qui s'effectue comme expliqué maintenant. Les plaquettes 105, 106 et les tôles de fixation 105', 106' sont enlevées. Ensuite, un outil 182 présentant une forme appropriée est placé sur le piston 123 à la place de la tôle de fixation 106', pour maintenir le piston 123 fixe en rotation par rapport au boîtier 102. A l'aide d'une clé 184, on visse l'écrou 180 de manière à pousser la plaque d'appui 176 vers le côté roue. La plaque d'appui 176 fait donc pivoter les cliquets 131 à l'encontre du ressort 168 jusque dans leur position de passage. Quand les cliquets 131 sont dans leur position de passage, ils ne peuvent pas coopérer avec les dents 138 et il est alors possible de translater le piston 123 vers le côté roue à l'aide de l'outil 182, de manière à positionner le piston 123 de nouveau dans la position de la figure 2. La position de passage est également appelée position de retour car elle permet le retour du piston 123 depuis une position dans laquelle l'usure est compensée à une position correspondant à des plaquettes neuves. En dévissant l'écrou 180 à l'aide de la clé 184, on permet au ressort 168 de repositionner les cliquets 131 dans leurs positions de coopération. On peut alors placer des plaquettes de frein 105, 106 neuves et réutiliser l'étrier 101.

Les figures 9 et 10 représentent un étrier 201 selon un deuxième mode de réalisation de l'invention. Les éléments de l'étrier électromécanique 201 identiques ou similaires à des éléments de l'étrier 101 portent les mêmes numéros de références que les éléments correspondant de 1' étrier 101, augmenté de 100. Certains éléments ne seront plus décrits en détail. L'étrier 201 diffère de l'étrier 101 par la façon de fixer les cliquets 231 de manière pivotante sur la plaque 230.

L'étrier 201 comprend six blocs 286, en forme de secteurs annulaires, fixés à la plaque 230 par des vis 288. Chaque bloc 286 est agencé entre deux cliquets 231 et présente deux alésages 290 ouverts sur les côtés tournés vers un cliquet 231. Une tige cylindrique 292 est placée du côté carrosserie de chaque cliquet 231, au niveau d'une zone concave 256, avec ses extrémités maintenues dans les deux alésages 290 adjacent. La surface extérieure de la tige cylindrique 292 coopère avec la surface concave 256 du cliquet 231, de manière similaire à la tête de vis 164, pour permettre un pivotement du cliquet 231.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Etrier de frein à disque électromécanique (101, 201), comportant un boîtier (102), un moteur électrique (103) logé dans ledit boîtier, une vis à billes (104) comprenant une partie rotative (118) couplée en rotation avec ledit moteur électrique et une partie mobile en translation (120) apte à se déplacer en translation par rapport au boîtier sous l'action du moteur électrique, ledit étrier comprenant une première plaquette de frein (106) reliée à un support de plaquette (123) couplé à ladite partie mobile en translation de la vis à billes par un organe de poussée (131, 136 ; 231), une deuxième plaquette de frein (105) reliée au boîtier de manière à être disposée en regard de ladite première plaquette de frein pour recevoir un disque de frein (107) entre lesdites plaquettes de frein, ledit organe de poussée étant apte à entraîner une translation conjointe de ladite partie mobile en translation de la vis à billes et dudit support de plaquette lors d'une rotation dudit moteur électrique dans un sens d'actionnement, de manière à rapprocher lesdites plaquettes de frein entre elles afin de serrer ledit disque de frein entre lesdites plaquettes de frein, une rotation dudit moteur électrique dans le sens opposé au sens d'actionnement entraînant une translation opposée de la partie mobile en translation de ladite vis à bille, **caractérisé en ce que** ledit étrier comprend un moyen élastique (152) apte à déplacer ledit support de plaquette (123) par rapport au boîtier d'une distance déterminée dans le sens de ladite translation opposée lors de ladite translation opposée, ledit organe de poussée définissant au moins une première et une deuxième position relative de ladite partie mobile en translation de la vis à billes et dudit support de plaquette, ledit support de plaquette dans ladite deuxième position relative étant plus proche de ladite deuxième plaquette que dans ladite première position relative, ledit organe de poussée étant configuré de sorte que ladite translation opposée entraîne le passage de ladite première position relative à ladite deuxième position relative lorsque la différence entre la longueur de ladite translation opposée et ladite distance déterminée est supérieure à un seuil donné.

2. Etrier selon la revendication 1, **caractérisé par le fait que** ledit support de plaquette (123) comprend une portion cylindrique (133) apte à coulisser dans un logement cylindrique (150) ménagé dans ledit boîtier, ledit boîtier présentant une rainure annulaire (148) ouverte du côté de l'intérieur dudit logement cylindrique, ledit moyen élastique comprenant un corps annulaire (152) en matériau élastomère agencé dans ladite rainure annulaire de manière à être en contact avec ladite portion cylindrique dudit support de plaquette, la section dudit corps annulaire étant inférieur à la section de ladite rainure annulaire de manière à ce qu'un jeu soit ménagé, ledit corps annulaire étant apte à se déformer lors de ladite translation conjointe et à reprendre sa forme initiale lors de ladite translation opposée.

3. Etrier selon la revendication 1 ou la revendication 2, **caractérisé par le fait que** ledit organe de poussée comprend une crémaillère (136) munie de dents (138) fixée audit support de plaquette et au moins un cliquet (131, 231) fixé à ladite partie mobile en translation de ladite vis à bille et destiné à coopérer avec ladite au moins une crémaillère, ledit au moins un cliquet étant apte à coopérer avec une première dent desdites dents lors de ladite translation conjointe, ladite première dent définissant ladite première position relative.

4. Etrier selon la revendication 3, **caractérisé par le fait que** ledit au moins un cliquet est apte à se désengager de ladite première dent lors de ladite translation opposée lorsque la différence entre la longueur de ladite translation opposée et ladite distance déterminée est supérieure audit seuil donné, pour coopérer avec une deuxième dent desdites dents, ladite deuxième dent définissant ladite deuxième position relative.

5. Etrier selon la revendication 3 ou la revendication 4, **caractérisé par le fait qu'**il comprend au moins une première crémaillère, une deuxième crémaillère, un premier cliquet destiné à coopérer avec ladite première crémaillère et un deuxième cliquet destiné à coopérer avec ladite deuxième crémaillère.

6. Etrier selon la revendication 5, **caractérisé par le fait que** les dents de ladite première crémaillère sont disposées en quinconce par rapport aux dents de ladite deuxième crémaillère, lesdits premier et deuxième cliquets étant alignés, de sorte que seul l'un desdits premier et deuxième cliquets coopère avec une dent lors de ladite translation conjointe.

7. Etrier selon la revendication 6, **caractérisé par le fait que** ledit seuil donné est égal à la moitié de la longueur d'une desdites dent.

8. Etrier selon l'une des revendications précédentes, **caractérisé par le fait que** ledit organe de poussée est apte à prendre un état de retour, ladite partie mobile en translation de la vis à billes et ledit support de plaquette étant aptes à passer de ladite deuxième position relative à ladite première position relative lorsque ledit organe de poussée est dans ledit état de retour.

9. Etrier selon l'une des revendications 3 à 7 prise en combinaison avec la revendication 8, **caractérisé par le fait que** ledit au moins un cliquet est monté de manière mobile entre une position de coopération dans laquelle il est apte à coopérer avec ladite au moins une crémaillère et une position de retour, correspondant audit état de retour de l'organe de poussée, dans laquelle il ne coopère pas avec ladite au moins une crémaillère.

10. Etrier selon la revendication 9, **caractérisé par le fait que** ledit organe de poussée comprend un organe élastique (168) apte à solliciter ledit au moins un cliquet dans ladite position de coopération et une plaque d'appui (176) coopérant avec ledit cliquet de sorte qu'un déplacement de ladite plaque d'appui à l'encontre de l'action dudit organe élastique sollicite ledit au moins un cliquet dans ladite position de retour de manière à le libérer de ladite au moins une crémaillère.

11. Etrier selon la revendication 9 ou la revendication 10, **caractérisé par le fait que** ledit organe de poussée comprend un support de cliquet (130) comprenant au moins une encoche de réception (160) dans laquelle est agencé ledit au moins un cliquet, ledit au moins un cliquet présentant un alésage traversant (162), ledit au moins un cliquet étant fixé audit support de cliquet par au moins une vis (163) dont la tige (166) traverse ledit alésage traversant, ledit alésage traversant étant conique, ledit au moins un cliquet, ladite au moins une encoche de réception et la tête de ladite au moins une vis présentant des surfaces courbées (158, 156) de formes correspondantes de manière à permettre un déplacement dudit au moins un cliquet entre ladite position de coopération et ladite position de retour.

12. Etrier selon la revendication 9 ou la revendication 10, **caractérisé par le fait que** ledit organe de poussée comprend un support de cliquet (230) présentant au moins un axe de pivotement (292), ledit au moins un cliquet étant fixé audit support de cliquet par ledit au moins un axe de pivotement de manière à pouvoir pivoter entre ladite position de coopération et ladite position de retour.

13. Etrier selon l'une des revendications précédentes, **caractérisé par le fait que** ledit organe de poussée définit plus de deux positions relatives de ladite partie mobile en translation de la vis à billes et dudit support de plaquette.

14. Etrier selon l'une des revendications précédentes, **caractérisé par le fait que** ladite partie rotative de ladite vis à bille définit un espace intérieur (121), ledit moteur électrique étant agencé à l'extérieur dudit espace intérieur.
